# EUROPEAN PATENT APPLICATION

(11) **EP 1 593 662 A1**
(43) Date of publication of application: **09.11.2005**
(21) Application number: 04076520.8
(22) Date of filing: 06.05.2004
(51) Int. Cl.: C05F 5/00, A01G 9/10

(54) **Improved peat reduced substrate**

(71) Applicant: Mensvoort, Rogier Petrus Adrianus Christian, 5062 LJ Oisterwijk (NL)
(72) Inventor: Mensvoort, Rogier Petrus Adrianus Christian, 5062 LJ Oisterwijk (NL)

(57) **Abstract**

Substrate or potting compost for optimally cultivating different kinds of plants, in which the raw material is peat with physical admixtures, such as flax scheven, and chemical admixtures such as lime and several salts, such as lime nitrate, potassium nitrate, NPK liquid manures and such, in which the raw material peat as well as the flax scheven as regards composition always comply with the Regulation Trade Potting compost standards and so each mixture combination of both, in which the specific gravity of the created substrate is lower than normal and also more endurable treatment of peat from nature is achieved.

## Description

The present invention relates to a substrate or potting compost for optimally cultivating different types of plants, in which the raw material is peat, and in which by admixing the suitable or optimal physical and chemical properties of the specific substrate or potting compost is obtained.

A substrate, potting compost or soil substrate for cultivating plants, in which the raw material is assumed to be dry turf or peat, is known from the German Patent document DE 4 343 569 C2 from Gottschall, Ralf, 37213 Witzenhausen, Germany; C. Dupré Umwelttechnik und Containerservice GmbH, 67346 Speyer, Germany, with inventors GOTTSCHALL, Ralf, Dipl-Agr. Ing, 37213 Witzenhazusen, Germany and DUPRÉ, Frank, 67346 Speyer, Germany.

In this patent document, in which the soil substrate is assumed to be dry turf or peat, enhanced with small wood chips and tree-bark in order to obtain a suitable grain size. Due to this, the soil substrate will be more or less faster biodegradable for bacteria, because the air infiltration and porosity of the mixture enlarges. This bacterial process has the disadvantage that toxical substances are released, such as organic acids, nitrite and ammonia and such and the nitrogen, which is necessary for the plants, is immobilized. According to this patent document the microbiological degradation of the substrate must be prevented in order to obtain a raw material for the production of a soil substrate for plants. Here, it is achieved by not reducing the grain size of the turf with wood chips and such, so that the surface of it is not enlarged, but by adding spelt (German wheat), flax scheven, vegetable and cocoa shells with a covering of wax or resin, silicic acid or water glass to this raw material. So, in fact, only a basic material or semi-manufactured product is obtained for the further production of soil substrate.

Here, it concerns a semi-manufactured product from peat that is stabilized with treated waste products, in order to use these rather useful, but it does not concern the production of optimal substrates for different types of plants. Actually this patent document has the disadvantage that in fact no substrate is produced, but a possible limited useable solution for reducing the quantity of organic domestic waste and process waste products.

Further a substrate is known from the German patent document DE 4 106 804 C1 of Holstein Flachs GmbH, 2360 Weede, Germany with inventors BRETTHAUSER, Jens and HEGER, Egon, 2300 Kiel, Germany. In this patent document it mainly concerns the raw material organic domestic waste products, which one wants to use for the production of soil improving products or garden mould. To the organic domestic waste products, which are processed into compost, more than 10 percentage by weight of flax scheven is added, in which the flax scheven can be thermally pre-treated.

Also this patent document has many disadvantages in practice, being, that the compost does not have a stable composition and can especially contain heavy metals, through which with the raw material for the obtained substrate one cannot comply with the RHP standards (Regulation Trade Potting compost). One is very apprehensive for the peak loads of heavy metals in the compost. Therefore, for cultivating vegetables, compost is not suitable as a raw material for substrate. For use in decorative cultivation the utility is also less, because frequent use of compost for substrate will cause soil pollution in the long run. Besides toxicity for plants, it gives some cultivation deprivation.

For a suitable and reliable substrate for plants in general, one must therefore start with the raw material peat and then add clean elements, as described in this patent document of the present invention.

The composition of all components such as peat, flax scheven, chemicals, must each separately comply with the RHP standards. In order to show this and that an analysis of peat, a pure natural product without pollution, and an analysis of flax scheven is attached in appendices 1-4.

Further, the cultivation of peat moors in Europe for the production of substrates and fuel should be as limited as possible with respect to enduring treatment of nature. It is required that the use of peat for fuel should be ceased and using peat for substrate for plants must be done as efficient as possible, in which especially as much as possible volume percentage of peat is replaced by enduring raw materials from the agricultural sector, such as, for example, waste material from flax, in this case the flax scheven.

It is the aim of the present invention to provide such an improved peat reduced substrate, in which the aforementioned disadvantages are solved and in which the substrate can be put onto the market in an economical and environmental responsible way.

For this, a substrate or potting compost according to the invention with the raw material peat is further developed by admixing in order to get optimal physical and chemical properties and to process the flax waste on a endurable and environmentally friendly manner, characterized in that to the raw material peat admixtures are done with flax waste to influence especially the physical properties, and with lime and salts to influence the chemical properties, in which the mentioned admixtures to influence or correct the physical properties consisting of flax waste are mainly in the form of flax scheven in a volume percentage between 1 and 75 percent, preferably approximately 25 percent.

The advantages are, that the substrate composition can contain all the specific properties for a specific plant and that the weight of 1m³ substrate becomes significantly lower by admixing the much lighter flax scheven. Weight of peat is = 300-500 kg/m³. Weight flax scheven = 100 kg/m³. The weight saving also gives advantages for the transport of the substrate and furthermore the flax scheven are further used in an environmentally friendly way.

Further, the substrate according to the invention is further developed in such a way, that the mentioned admixtures for influencing the chemical properties of the substrate, such as the acidity (pH), is done with lime Ca(HCO₃)₂, in which the admixtures for influencing the chemical properties, such as a concentration of salts and nutrients, is done on the basis of organic and inorganic nutrients, such as, for example, lime nitrate, potassium nitrate, NPK liquid manure substances, Epsom salt, ammonium nitrate, potassium sulphate and trace elements, etc.

The advantages are, that the whole range of chemical properties can be corrected in an efficient way and for each kind of plant an optimal substrate composition can be offered.

Finally it has to be emphasized, that the above description constitutes preferred embodiments of the invention, but that also other modifications are possible without departing the scope of this patent document.

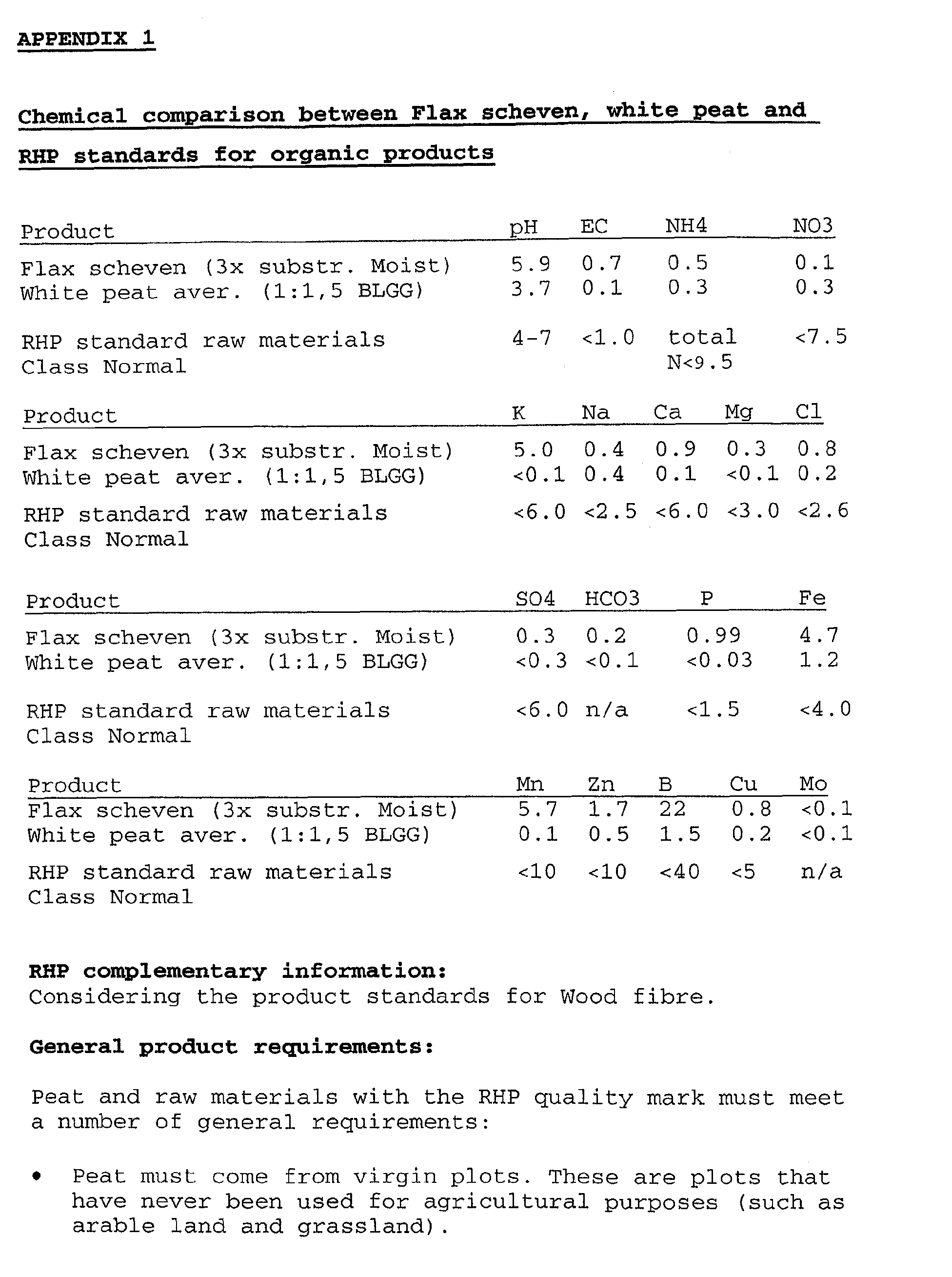

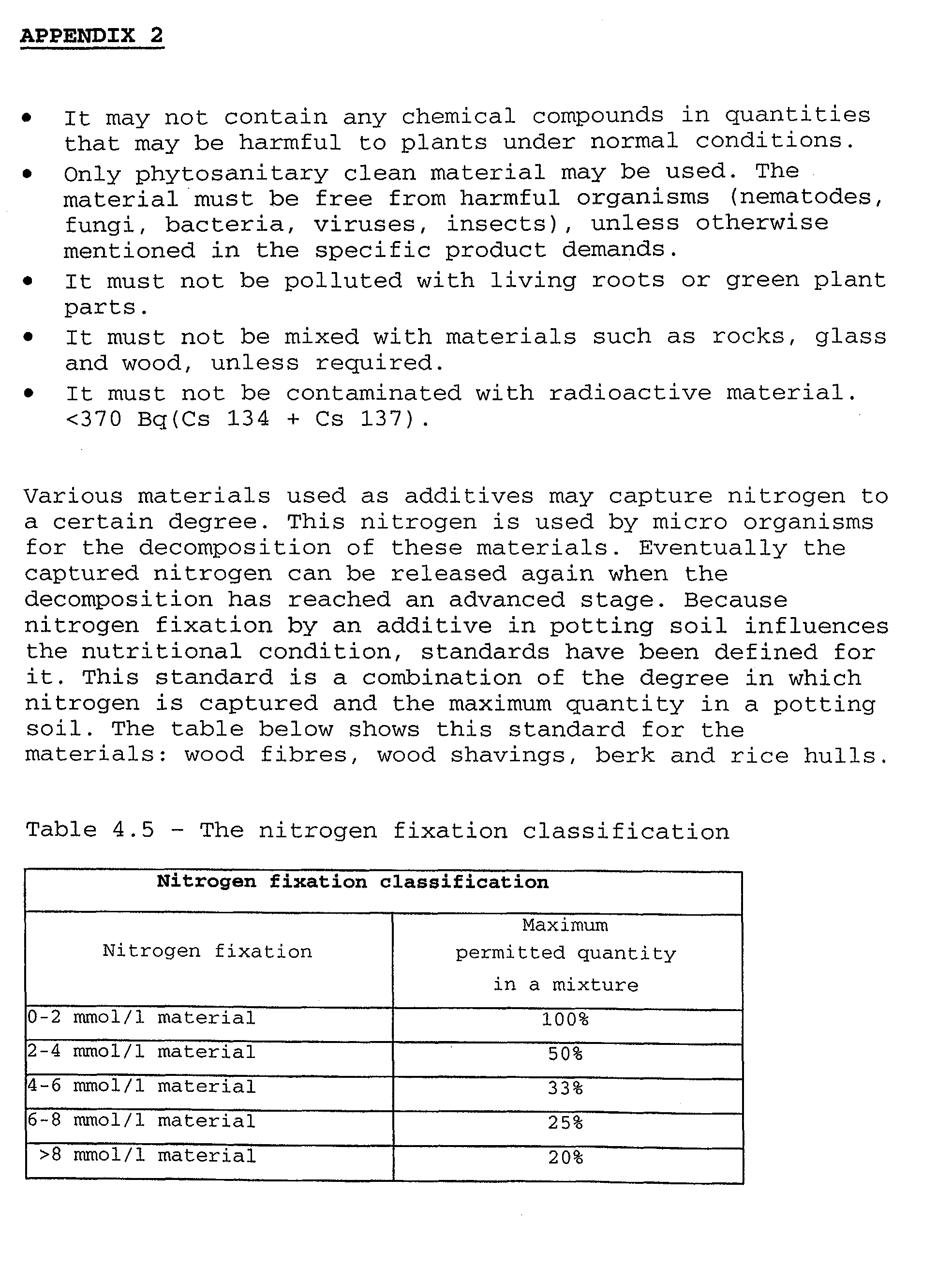

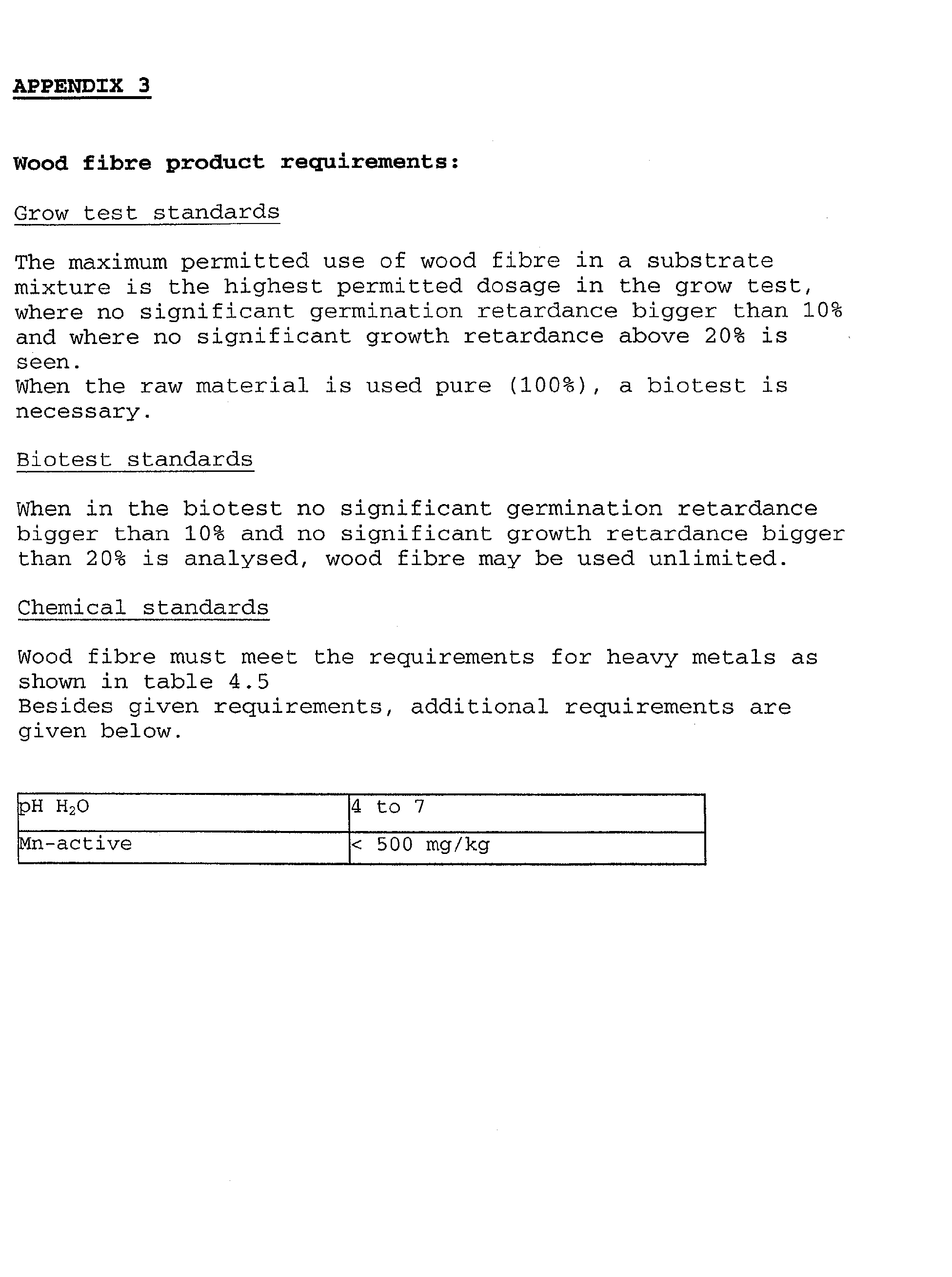

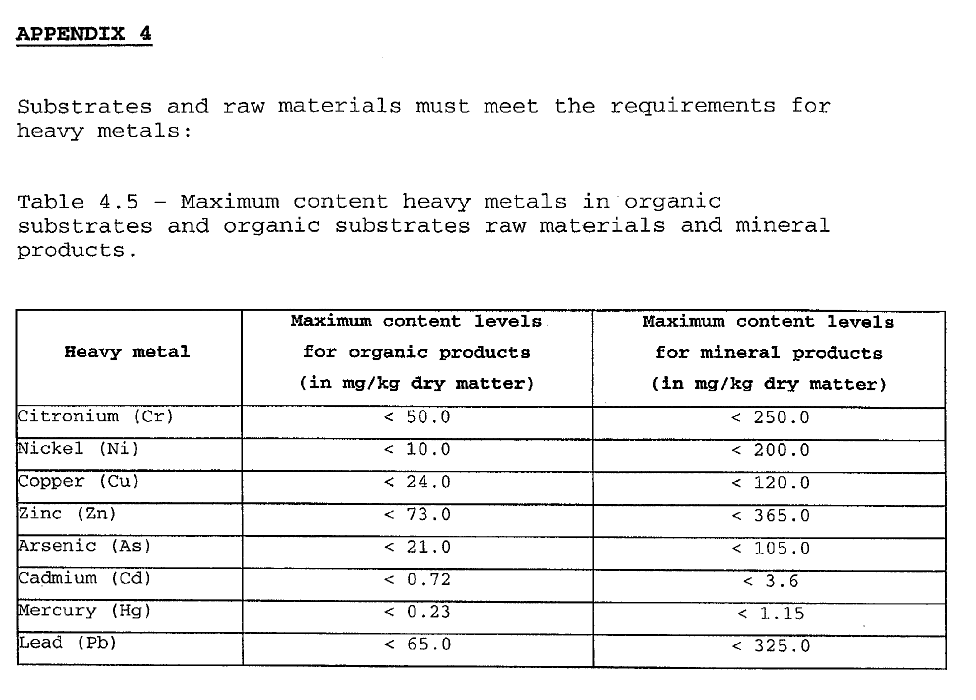

## Claims

1. Substrate or potting compost for optimally cultivating different types of plants, in which the raw material is peat, and in which by admixing the suitable or optimal physical and chemical properties of the specific substrate or potting compost is obtained, **characterized in that**, to the raw material peat admixtures are done with flax waste to influence especially the physical properties, and with lime and salts to influence the chemical properties.

2. Substrate as claimed in claim 1, **characterized in that**, the mentioned admixtures to influence or correct the f]physical properties consisting of flax waste are mainly in the form of flax scheven in a volume percentage between 1 and 75 percent, preferably approximately 25 percent.

3. Substrate as claimed in claim 1, **characterized in that**, the mentioned admixtures for influencing the chemical properties of the substrate, such as the acidity (pH), is done with lime Ca(HCO₃)₂.

4. Substrate as claimed in claim 1, **characterized in that**, the admixtures for influencing the chemical properties, such as a concentration of salts and nutrients, is done on the basis of organic and inorganic nutrients, such as, for example, lime nitrate, potassium nitrate, NPK liquid manure substances, Epsom salt, ammonium nitrate, potassium sulphate and trace elements, etc.

5. Substrate as claimed in claim 2, **characterized in that**, the mentioned flax scheven can be cleaned by means of steaming.

6. Substrate as claimed in claims 1, 2 and 5, **characterized in that**, for influencing the physical properties, such as the moisture capacity and capillary action, the division of the fraction dimensions of the flax scheven, can be determined by means of filtering, so that each time a suitable division of the grain size is obtained.

7. Substrate as claimed in aforementioned claims, **characterized in that**, to the substrate, for obtaining a more solid form or sufficient stick, such as for obtaining a solid clod around the roots, binders, such as clay minerals are added.

8. Substrate as claimed in aforementioned claims, **characterized in that**, the mentioned flax waste can consist of scheven, chaff fibres, roots and such from this plant.

## Amended claims

### Amended claims in accordance with Rule 86(2) EPC.

**1.** Substrate or potting compost for optimally cultivating different types of plants, in which the raw material is peat, and in which by admixing the suitable or optimal physical and chemical properties of the specific substrate or potting compost is obtained, **characterized in that**, the raw material peat, which, in this case, is a mixture of at least two vertical different peat layers of the peat field, such as upper layer sphagnum or white peat, intermediate layer or grey peat and bottom layer or black peat, is admixtured by flax waste to influence especially the physical properties, and to influence the chemical properties, such as lime and salts.

**2.** Substrate as claimed in claim 1, **characterized in that,** the mentioned admixtures to influence or correct the physical properties consisting of flax waste are mainly in the form of flax shives in a volume percentage between 1 and 75 percent, preferably approximately 25 percent.

**3.** Substrate as claimed in claim 1, **characterized in that,** the mentioned admixtures for influencing the chemical properties of the substrate, such as the acidity (pH), is done with lime Ca(HCO₃)₂.

**4.** Substrate as claimed in claim 1, **characterized in that,** the admixtures for influencing the chemical properties, such as a concentration of salts and nutrients, is done on the basis of organic and inorganic nutrients, such as, for example, lime nitrate, potassium nitrate, NPK liquid manure substances, Epsom salt, ammonium nitrate, potassium sulphate and trace elements, etc.

**5.** Substrate as claimed in claim 2, **characterized in that,** the mentioned flax shives can be cleaned by means of steaming.

**6.** Substrate as claimed in claims 1, 2 and 5, **characterized in that**, for influencing the physical properties, such as the moisture capacity and capillary action, the division of the fraction dimensions of the flax shives, can be determined by means of filtering, so that each time a suitable division of the grain size is obtained.

**7.** Substrate as claimed in aforementioned claims, **characterized in that**, to the substrate, for obtaining a more solid form or sufficient stick, such as for obtaining a solid clod around the roots, binders, such as clay minerals are added.

**8.** Substrate as claimed in aforementioned claims, **characterized in that,** the mentioned flax waste can consist of shives, chaff fibres, roots and such from this plant.
